# EUROPEAN PATENT APPLICATION

(11) **EP 1 734 783 A1**
(43) Date of publication of application: **20.12.2006**
(21) Application number: 06251918.6
(22) Date of filing: 05.04.2006
(51) Int. Cl.: H04Q 7/38

(54) **Method and apparatus for wireless communication using location based service discovery**

(30) Priority: 15.06.2005 GB 0512200
(71) Applicant: KABUSHIKI KAISHA TOSHIBA, Tokyo 105-8001 (JP)
(72) Inventor: Haines, Russell John, Bristol BS1 4ND (GB); Basgeet, Dharmayashdev Rai, Bristol BS1 4ND (GB)
(74) Representative: Round, Edward Mark

(57) **Abstract**

A wireless communications device employs a method of access technology selection that comprises analysing radio signals for indications of the device's current physical environment. In response to this analysis, it is determined which of two or more candidate environments are the most likely current physical environment of the wireless communications device. The wireless communications device then selects, from among all possible access technologies, a subset of access technologies typical of the determined environment. The wireless communications device then performs a wireless access discovery over frequencies corresponding to said subset, and selects a suitable access technology thus found by the discovery process.

## Description

This invention relates to apparatus, methods and processor control code for wireless communications. In particular, but not exclusively, it relates to establishing wireless communications amongst a plurality of possible wireless access technologies.

In recent years, the number of available wireless access technologies has proliferated to include, for example, Bluetooth ®, wireless LAN and 3G. Each of these access technologies provides a different type of connectivity for a user, based upon desired data rate, coverage area and mobility.

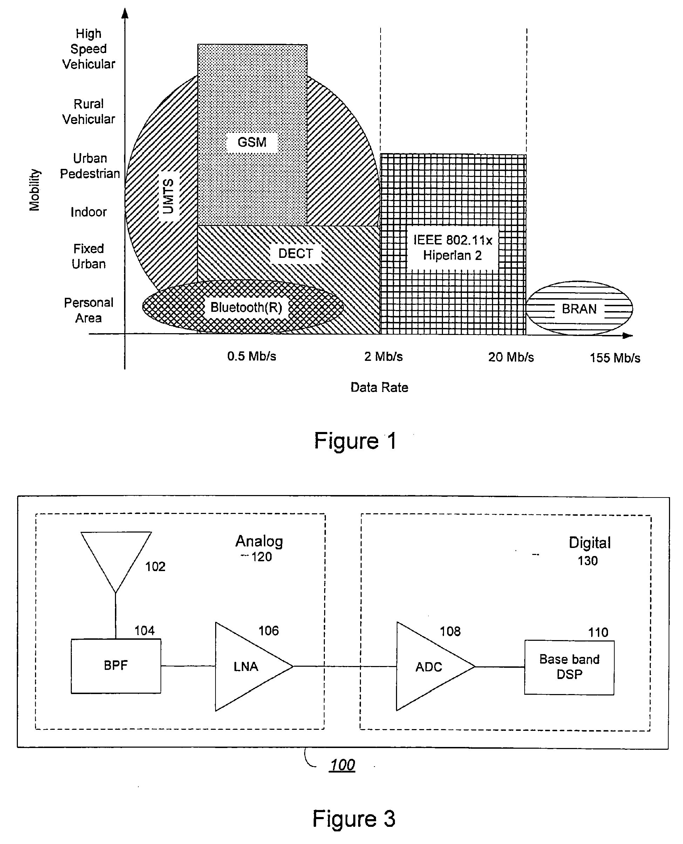

Figure 1 illustrates the mobility characteristics for a selection of common access technologies as a function of data rate. One can see that each access technology provides different capabilities to a user, and significantly one can see that no single access technology would be a suitable candidate to replace all the others.

A mobile communications device seeking to provide most or all of the capabilities available will therefore need to embody a horizontal communication model that embraces all these access technologies. In such a model, one device can access wide area, cellular networks, such as 2G, 2.5G and 3G, wireless metropolitan area networks such as IEEE802.16, wireless local area networks such IEEE 802.11 and HIPERLAN-1/2, and personal area networks such as Bluetooth and BRAN.

In 4^{th} generation wireless (4G), it is anticipated that such a horizontal communication model, utilising these pre-existing access systems, will be adopted in preference to the development of a new unified air interface. This strategy limits the need for associated additional infrastructure as well as the need to solve compatibility requirements with existing and newly emerging access systems. It also allows differing access schemes to complement each other, for example providing a wireless hot spot in an underground station in lieu of cellular coverage.

To this end, it is anticipated that the different access systems will uses a common Internet Protocol (IP) based process when in a 4G-communication mode, so providing a multiplicity of seamless routes into an IP communications core network.

As each of these access technologies are based on mutually incompatible standards and protocols, it is desirable that a 4G, 3G or other similar mobile device is highly configurable to be able to adapt to each selected access system in turn. A technology that has been developed to provide such flexibility is software definable radio (SDR).

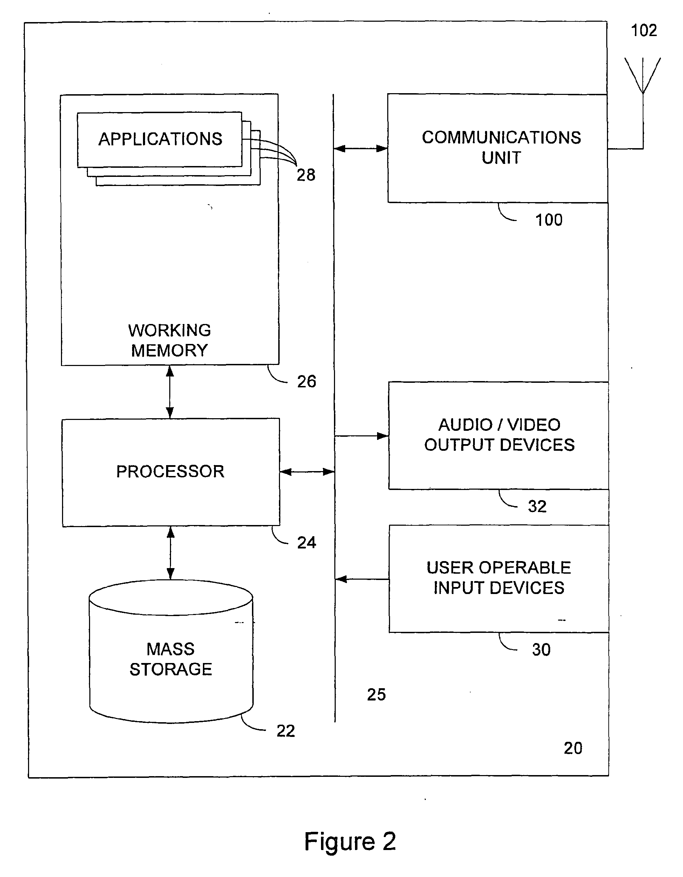

Figure 2 illustrates schematically a wireless communications device 20 providing an example of background to the invention. The device 20 comprises a processor 24 operable to execute machine code instructions stored in a working memory 26 and/or retrievable from a mass storage device 22. By means of a general-purpose bus 25, user operable input devices 30 are in communication with the processor 24. The user operable input devices 30 comprise, in this example, a keyboard and a touchpad, but could include a mouse or other pointing device, a contact sensitive surface on a display unit of the device, a writing tablet, speech recognition means, haptic input means, or any other means by which a user input action can be interpreted and converted into data signals.

Audio/video output devices 32 are further connected to the general-purpose bus 25, for the output of information to a user. Audio/video output devices 32 include a visual display unit, and a speaker, but can also include any other device capable of presenting information to a user.

A communications unit 100 is connected to the general-purpose bus 25, and further connected to an antenna 102. By means of the communications unit 100 and the antenna 102, the device 20 is capable of establishing wireless communication with another device. The communications unit 100 is operable to convert data passed thereto on the bus 25 to an RF signal carrier in accordance with a communications protocol previously established for use by a system in which the device 20 is appropriate for use.

In the device 20 of Figure 2, the working memory 26 stores user applications 28 which, when executed by the processor 24, cause the establishment of a user interface to enable communication of data to and from a user. The applications 28 thus establish general purpose or specific computer implemented utilities and facilities that might habitually be used by a user.

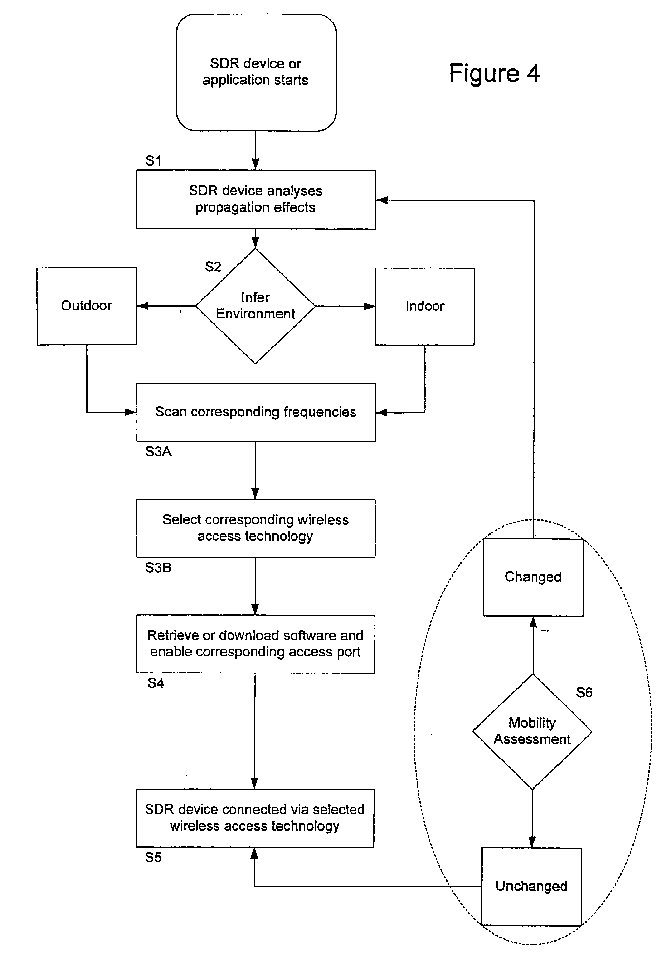

In Figure 3, the communications device 100 is illustrated as an idealised software definable radio (SDR). The SDR 100 comprises analogue and digital parts (120 and 130 respectively). The analogue part 120 comprises the antenna 102, a band pass filter 104 and a low noise amplifier 106. Upon amplification, the signal is passed to the digital part 130, where it is digitised by an analogue to digital converter 108, and then processed by a reprogrammable base band digital signal processor 110. The signal processor 110 is configured according to the required standards and protocols for the selected access technology.

In practice, for 4G the different requirements of each access technology and the different radio frequencies that they consequently employ mean that more than one antenna is necessary to cover the full range of required frequency bands, and so one may assume the presence of multiple antennas.

It will be appreciated that with so many ways to access the same 4G service, a mobile device must make a decision as to which is the best available access mode for its current needs. For example, a user making a voice call in a car may be best served by a 2G or 2.5G cellular system, whilst a person sitting in a café watching a streaming video may be best served by a WLAN hot spot.

To decide on the best access mode to use for a given application, the device should assess the likely quality of service (QoS) that would be provided by each access technology. This will be a function of the application's requirements, the access technology's innate capabilities, the mobility of the device and the current quality or availability of each access technology. To judge this latter factor, the device must determine which access services are currently available, in a process known as wireless access discovery.

However, wireless access discovery is a significant task for a mobile device. The frequency spectrum occupied by possible 4G access technologies is very wide, ranging from GSM at 400 MHz to HIPERLAN-2 / BRAN at typically 5 to 11 GHz, and comprising over 20 sub-ranges used by the different technologies. Due to this breadth of frequencies and the differing access mechanisms that must be interpreted, the mobile device must scan and process the entire candidate frequency spectrum in search of available wireless networks, before selecting one and configuring itself to access it. This can cause a considerable load on the battery of a mobile device, and can also cause significant delay in arranging a connection for the application.

It is insufficient to assume that a specific application or data type can be best served by one access technology and so simply scan for that technology's frequencies. The main reasons are that firstly, many high bandwidth access technologies have limited range and availability and so are not guaranteed to be available to a mobile device at a given point, and secondly, the air interface is variable and so even a recently used link may subsequently prove to have a poorer quality at connection time than an alternative.

In one effort to streamline wireless access discovery, Salkintzis, A. K., et al., "WLAN-GPRS integration for next-generation mobile data networks," (Wireless Communications, IEEE, vol.: 9, Issue: 5, Oct. 2002, pp. 112-124), proposes a tight coupling between general packet radio switching (GPRS) and wireless LAN technology, wherein WLAN provides an alternative high bandwidth radio transport for GPRS, where it is available. However, this solution has the significant disadvantage that when the mobile device is outside the range of a WLAN access point, it will continually search for a new access point beacon signal. This searching wastes power, which is a limited resource in a mobile device.

Moreover, the above proposal is only a partial solution to the general problem of wireless access discovery, as it only considers a subset of the access technologies available.

Consequently, it is desirable to find an improved means and method by which to assess and select from amongst a plurality of heterogeneous wireless access technologies.

Accordingly, the present invention seeks to address, mitigate or alleviate the above problem.

In a first aspect of the present invention, a mobile communications device comprising a radio signal analyser, the mobile communications device being arranged in operation to determine from an analysis of radio signals whether said mobile communications device is in a first physical environment.

In a configuration of the above aspect, the mobile communications device includes a determination means operable to determine in which of a plurality of physical environments the mobile communications device is most likely to be located.

In a configuration of the above aspect, the determination means is responsive to analysis providing any or all of signal Doppler shift, signal angle of arrival, multipath signals, channel spread, signal timing advance, and correlation factor.

In a configuration of the above aspect, a subset of frequencies corresponding to those bands used by access technologies typical of the determined environment is scanned.

In a configuration of the above aspect, the scanning order is influenced by any or all of; wireless communication device mobility, desired data rate, comparative prevalence of each selected access technology in the determined environment, access costs, and any salient information in the user profile, such as access type preferences.

In a configuration of the above aspect, the wireless communication device comprises a software-defined radio.

In a second aspect of the present invention, a method of access technology selection comprises analysing radio signals for indications of a device's current physical environment, and then determining in response to the analysis which of two or more candidate environments is the most likely current physical environment; selecting a set of access technologies typical of the determined environment, and performing a wireless access discovery process over the frequencies corresponding to said set, in order to select a suitable access technology found by the discovery process.

In a configuration of the above aspect, in use a wireless communications device also acquires software corresponding to the selected wireless access technology, and installs and configures it as appropriate, before initiating a communication link with an access point that is servicing the selected wireless access technology.

In a configuration of the above aspect, the acquisition of software comprises accessing the software stored in a storage means of the wireless communications device.

In a configuration of the above aspect, the acquisition of software comprises downloading the software from an access point servicing the selected wireless access technology.

In a configuration of the above aspect, downloading the software involves requesting the necessary data and authenticating its source before downloading it, installing it and configuring it as appropriate.

In a configuration of the above aspect, downloading the software further involves negotiating with the access point to determine aspects of the ensuing communication that may affect quality of service.

In a configuration of the above aspect, once communications are instigated, the method further comprises checking for evidence that the physical circumstances of the wireless communications device have changed, either in terms of the environment or by a level of change in device mobility.

In a configuration of the above aspect, if, on the basis of evidence, said checking step results in a determination that the physical circumstances of the device have changed, then the above described process of access technology selection is repeated.

In a third aspect of the present invention, code residing on a data carrier comprises instructions that, when loaded into a computer, cause the computer to operate as a wireless communications device as claimed herein.

Embodiments of the present invention will now be described by way of example with reference to the accompanying drawings, in which:
Figure 1 is a graph illustrating the mobility of a selection of common access technologies as a function of data rate, with data rate on the x-axis and mobility on the y-axis;
Figure 2 is a schematic illustration of a wireless communication device known in the art.
Figure 3 is a simplified schematic diagram of a software definable radio architecture;
Figure 4 is a chart illustrating the location in radio frequency of a selection of wireless access technologies;
Figure 5 is a flow diagram illustrating a method of access technology selection in accordance with an embodiment of the present invention;
Figure 6 is a flow diagram illustrating a method of software download and installation in accordance with an embodiment of the present invention, and;
Figure 7 is a schematic illustration of a wireless communication device in accordance with an embodiment of the present invention.
Figure 8 is a simplified schematic diagram of a software definable radio architecture in accordance with an embodiment of the present invention.

A wireless communication device and a method of access technology selection are disclosed. In the following description, a number of specific details are presented in order to provide a thorough understanding of embodiments of the present invention. It will be apparent, however, to a person skilled in the art that these specific details need not be employed to practice the present invention.

In an embodiment of the present invention, a mobile communications device analyses the environmental effects on radio propagation in its vicinity to determine if it is indoors or outdoors. By identifying the likely environment, a subset of all access technologies most likely to occur in that environment can be chosen and scanned for, so reducing the time and power used to scan for an appropriate access technology.

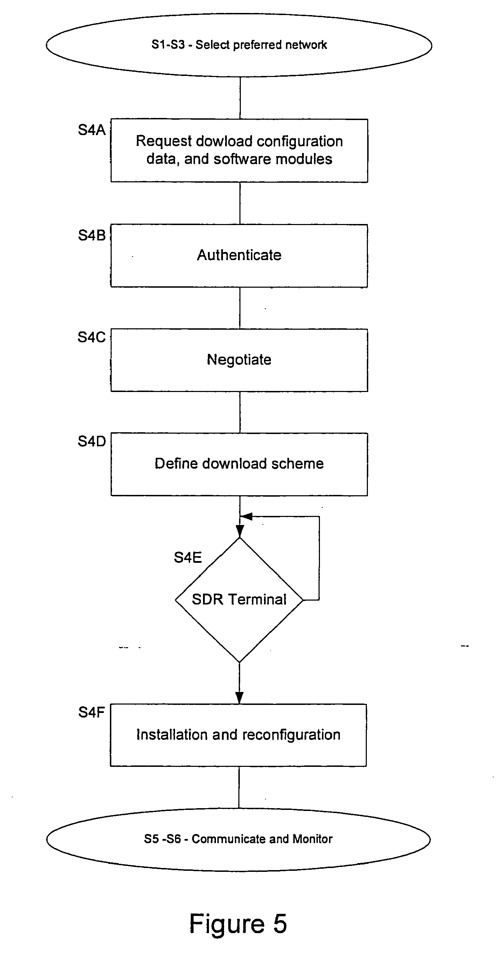

Referring new to Figure 5, a method of access technology selection is illustrated for an embodiment of the present invention. In step s1 of this method, upon activation of the device or of an application on the device requiring wireless communications, the local radio propagation environment is evaluated. In step s2, the physical environment is inferred from the radio propagation environment, and is fed into the scanning process of steps s3A and s3B.

Evaluation and inference may use a number of indicators. For example, Doppler shift can indicate high mobility and thus the likelihood of being in a vehicle outdoors. Also, the angle of arrival of signals between multiple antennas can indicate, for example, multipath effects within an enclosed space, or the transit past a point source such as a roadside base station. Similarly, the channel spread can reveal a plurality of paths differing only slightly and thus indicating indoor reflection, or alternatively can show a greater variance in path length outdoors. Other indicators will be apparent to the person skilled in the art, such as timing advance or path delay correlation factor, and are envisaged within the scope of the present invention. One, some or all of these indicators may be used to infer the physical environment.

For example, in an embodiment of the present invention, the device may utilise standardised frequency channels such as pilot channels, broadcast channels, GPS signals or other expected signal sources to derive these indicators.

Thus, the above indicators are obtained passively. Alternatively or in addition, in an embodiment of the present invention the mobile device may transmit a signal and detect the resulting propagation effects, for example the level, direction and timing of backscattering indicative of being indoors or outdoors.

In step s3A, in an embodiment of the present invention the inferred physical environment is used to select a subset of access technologies for wireless access discovery. In step s3B, one access technology is then selected.

Thus, for example, if an indoor environment is inferred, then a subset of frequencies is selected for wireless access discovery that corresponds to access technologies expected within an indoor environment.

In an embodiment of the present invention, the subset of frequencies is further limited to those access technologies expected within the inferred environment that are able to meet the data and/or mobility requirements of the requesting application.

Optionally, a subset may also be prioritised for wireless access discovery to derive a frequency scanning order, based upon any or all of:
i. data rate limits;
ii. mobility limits, and;
iii. ubiquity.

For example, if an indoor environment is inferred, then the most prolific access technology that meets the application requirements is scanned for first. If this first access technology is discovered and meets an acceptable QoS standard (e.g. for aspects such as delay, bit error rate and throughput), then a connection is made and no further scanning occurs. Otherwise, the next access technology is scanned for, and is only used if it is discovered to meet the QoS standards. This process continues through the scanning order until an access scheme is selected.

It will be apparent to a person skilled in the art that other aspects of an access technology that may be used to rank preference can be included in composing a frequency scanning order, for example service cost and historic user ratings for the access type.

In any of the above embodiments, if no access technology within the selected subset is discovered or has an acceptable QoS, then the remaining access technologies are also scanned for and selected amongst. This allows for the circumstance where an environment was erroneously identified, for example if an indoor environment was inferred just while driving through a tunnel.

Once an access technology has been selected, then in step s4 the appropriate software to manage communications is either retrieved from a storage means within the mobile communications device, or is downloaded. In an embodiment of the present invention, such a download may include a negotiation phase (e.g. codec compression ratios, tariff, user priority) that affects QoS.

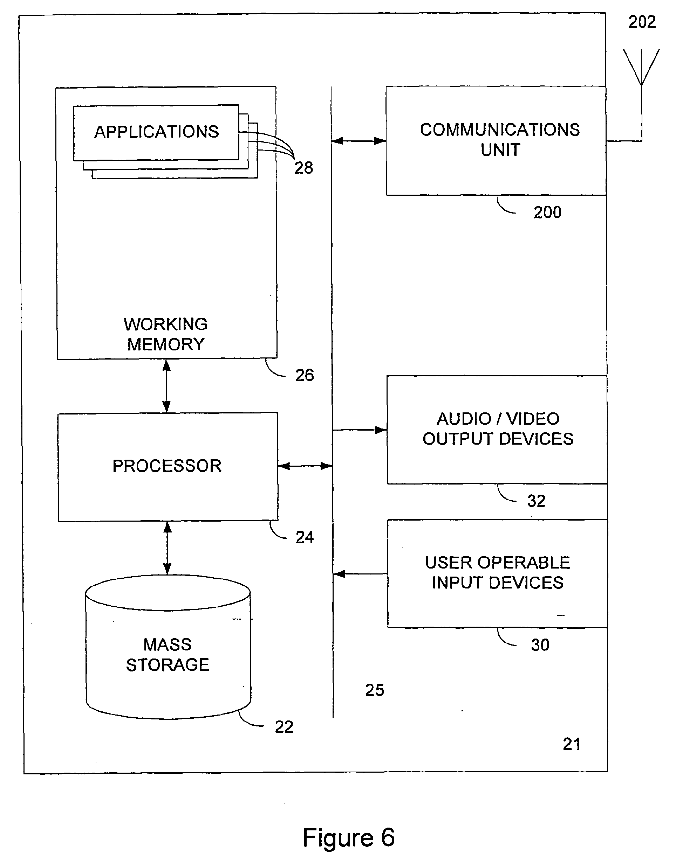

Referring now also to Figure 6, in an embodiment of the present invention step s4 is presented in more detail for the particular case of downloading communications software to a software definable radio.

In step s4A, a request for the appropriate software modules and reconfiguration instructions (if separate) are sent to the access point. In step s4B, the SDR authenticates the access point as a trusted source for the software. In step s4C, the SDR may optionally negotiate with the access point. These negotiations may be related to the way in which the software is downloaded, and also with aspects of the subsequent connection that may be software or application dependent. In step s4D, the software is downloaded. In step s4E, the software is verified and reacquired if necessary, and in step 4F it is installed and the SDR reconfigured.

Returning now to Figure 5, in step s5 the SDR is now equipped to communicate using the selected wireless access technology.

Optionally, step s6 allows for the SDR to make ongoing checks that the inferred environment has not changed, for example by monitoring mobility using Doppler shifting. If the environment appears likely to have changed, then the SDR can perform a new wireless access discovery whilst maintaining its current communication, and opt to move to a better access point if available, provided the handover process would meet QoS requirements.

Alternatively or in addition, step s6 allows the SDR to monitor its own mobility, which may change within the same environment (for example, a vehicle joining or leaving a traffic jam). If the mobility changes by a threshold level, then similarly the SDR can perform a new wireless access discovery whilst maintaining its current communication, and opt to move to a better access point if available, provided the handover process would meet QoS requirements. It will be clear to a person skilled in the art that the thresholding of mobility can be relative to current mobility, an absolute value, or a combination of both.

It will also be apparent to a person skilled in the art that where only two environments are considered (for example, indoors and outdoors), it may be sufficient to only determine the likelihood of being in one of said environments in order to make the inference.

In contrast, if more environments are to be distinguished (for example, stationary indoors, pedestrian outdoors and rapid transit), then evidence for several or all of them may need to be evaluated.

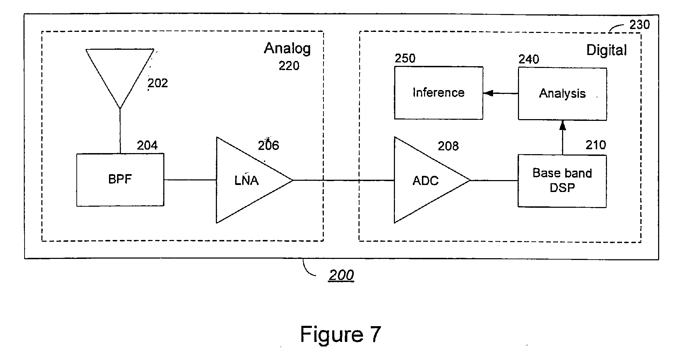

Figure 7 illustrates schematically a wireless communications device 21 in accordance with an embodiment of the present invention. Components of the wireless communications device 21 substantially similar to those of the device known in the art as illustrated in figure 2 retain the same reference numbers for clarity.

New communications unit 200 is illustrated in Figure 8 as an idealised SDR 200 in accordance with an embodiment of the present invention. The SDR 200 comprises analogue and digital parts (220 and 230 respectively). The analogue part (220) comprises an antenna 202, a band pass filter 204 and a low noise amplifier 206. Upon amplification, the signal is passed to the digital part (230), where it is digitised by an analogue to digital converter 208, and then processed by a reprogrammable base band digital signal processor 210. The processed signal is then analysed by analysis means 240, and a decision means 250 determines whether the SDR 200 is in a given environment.

As before, in practice for 4G the different requirements of each access technology and the different radio frequencies that they consequently employ mean that more than one antenna is necessary to cover the full range of required frequency bands. Only one such antenna 202 is shown in Figure 6 for clarity.

It will be apparent to a person skilled in the art that the analysis means 240 and determination means 250 may each or both be incorporated within DSP 210. Similarly it will be apparent to a person skilled in the art that such analysis and determination means may be arranged in operation to take inputs from any element of the SDR that provides useful information for the purpose of determining the environment of the SDR.

Advantageously, the above embodiments of the present invention reduce the typical number of frequencies that need to be scanned during the wireless access discovery process, resulting in a faster overall connection time to a selected service, and prolonging battery life by shortening the discovery task.

Moreover, unlike Salkintzis, A. K. et al., the above embodiments are independent of the type of access technologies available to the SDR.

## Claims

1. A mobile communications device comprising signal analysis means and environment determination means, the mobile communications device being arranged in operation to determine from an analysis of radio signals whether said mobile communications device is in a first physical environment.

2. A mobile communications device in accordance with claim 1 wherein the determination means is operable to determine in which of a plurality of physical environments the mobile communications device is most likely to be located.

3. A mobile communications device in accordance with any one of the preceding claims wherein in operation, the determination of the physical environment is responsive to analysis providing any or all of
i. signal Doppler shift;
ii. signal angle of arrival;
iii. multipath signals;
iv. channel spread;
v. signal timing advance, and;
vi. correlation factor.

4. A mobile communications device in accordance with any one of the preceding claims wherein in operation a wireless access discovery process is restricted to those access technologies likely to serve the determined environment.

5. A mobile communications device in accordance with claim 4 wherein the order in which access technologies are scanned for is dependent upon any or all of
i. device mobility;
ii. desired data rate;
iii. comparative prevalence of access technology in the determined environment;
iv. access cost, and;
v. user profile data.

6. A mobile communications device according to any one of the preceding claims, wherein the mobile communications device comprises a software defineable radio.

7. A method of access technology selection comprising the steps of
analysing radio signals for evidence of the current physical environment of a wireless communications device;
determining the most likely current physical environment in response to the analysis;
selecting a set of access technologies appropriate to the determined environment;
performing a wireless access discovery for the selected set of access technologies, and;
selecting one of the access technologies identified by the discovery process.

8. A method of access technology selection according to claim 7 further comprising the steps of;
acquiring software corresponding to the selected wireless access technology;
installing and configuring said software as appropriate, and;
initiating a communication link with an access point servicing the selected wireless access technology.

9. A method of access technology selection according to claim 8 wherein the step of acquiring software comprises accessing the software stored in a memory means of the wireless communications device.

10. A method of access technology selection according to claim 8 wherein the step of acquiring software comprises downloading the software from an access point servicing the selected wireless access technology.

11. A method of access technology selection according to claim 10 wherein downloading the software comprises the steps of
requesting the software and any other necessary reconfiguration data;
authenticating the access point;
downloading the software, and;
installing and configuring the software as appropriate.

12. A method of access technology selection according to claim 11 wherein downloading the software further comprises the step of negotiating with the access point to determine aspects of the ensuing communication that may affect quality of service.

13. A method of access technology selection according to any one of claims 7 to 12 further comprising the step of monitoring radio signals for indications of a change of physical environment during communications using a selected access technology.

14. A method of access technology selection according to claim 13 wherein if it is determined that the physical environment has changed, then the set of appropriate wireless access technologies is reappraised and a new selective wireless access discovery is performed, and if an alternative access point is preferred then a communications handover to the preferred access point is performed.

15. A method of access technology selection according to claim 13 wherein if it is determined that the mobility of the wireless communications device has changed by a threshold amount, then the set of appropriate wireless access technologies is reappraised and a new selective wireless access discovery is performed, and if an alternative access point is preferred then a communications handover to the preferred access point is performed.

16. A data carrier comprising computer readable instructions that, when loaded into a computer, cause the computer to operate as a wireless communications device in accordance with any one of claims 1 to 6.

17. A data carrier comprising computer readable instructions that, when loaded into a computer, cause the computer to carry out the method of any one of claims 7 to 15.
